# EUROPÄISCHE PATENTSCHRIFT

(11) **EP 1 882 408 B1**
(45) Veröffentlichungstag und Bekanntmachung des Hinweises auf die Patenterteilung: **31.12.2008**
(21) Anmeldenummer: 07012090.2
(22) Anmeldetag: 20.06.2007
(51) Int. Cl.: A01D 90/04

(54) **Erntegutschneidmesser**
Crop cutter
Lame de coupe de plantes récoltées

(30) Priorität: 27.07.2006 DE 102006034799
(43) Veröffentlichungstag der Anmeldung: 30.01.2008
(73) Patentinhaber: Alois Pöttinger Maschinenfabrik Ges. m.b.H., 4710 Grieskirchen (AT)
(72) Erfinder: Aumayr, Klaus, Dipl.-Ing., 4612 Scharten (AT); Edlbauer, Karl, Ing., 4710 Grieskirchen (AT); Menzl, Herbert, Ing., 4600 Wels (AT); Baldinger, Martin, Dr., Dipl.-Ing., 4722 Peuerbach (AT)
(74) Vertreter: Thoma, Michael

(56) Entgegenhaltungen:
- DE-A1-2102004 037 21
- DE-U1-3202004 004 13

## Beschreibung

Die vorliegende Erfindung betrifft ein Erntegutschneidmesser für einen Ladewagen, eine Ballenpresse oder dergleichen, mit einem plattenförmigen Messerkorpus, der umfangsseitig zumindest eine vorzugsweise etwa säbelförmig gekrümmte Schneide aufweist, die für einen stehenden Schnitt in einem Erntegutförderkanal vorgesehen ist, durch den hindurch das zu schneidende Erntegut über das stehende Erntegutmesser führbar ist.

Ladewagen mit im Ladebetrieb stehenden Messern besitzen üblicherweise säbelförmig gekrümmt ausgebildete Schneiden an den Messern, die sich in Förderrichtung durch den Förderkanal betrachtet zunehmend weiter in den Kanal hinein erstrecken, wodurch ein kontinuierlich, sanft ansteigender Schneidendruck erreicht, eine gute Schnittleistung bewirkt und eine schonende Futterzerschneidung gewährleistet wird. Das Futter wird trotz des Zerschneidens wenig beschädigt, wobei sich eine solche im Ladebetrieb stehende Messeranordnung gleichzeitig durch ihren einfachen Aufbau auszeichnet.

Ein derartiger Ladewagen ist beispielsweise aus der DE 20 2004 004 133 U1 bekannt. Dabei sind eine Vielzahl von Messern auf einem gemeinsamen Messerbalken gelagert, der beweglich aufgehängt ist, so dass er abgesenkt und damit die Messer aus dem Förderkanal herausgefahren werden können. In dieser herausgefahrenen Stellung kann ein an einem Schwenkarm aufgehängter Schleifer über die Schneide der Messer fahren, wobei der genannte Schwenkarm über eine Quertraverse verfahrbar ist, so dass der Schleifer Messer für Messer schleifen kann. Wird der Messerbalken hingegen in die Betriebsstellung geschwenkt, ragen die Messer in den Förderkanal und wirken dort mit der Fördervorrichtung zusammen.

Auch wenn bei dem bekannten Ladewagen gemäß DE 20 2004 004 133 U1 ein Schärfen der Messer auch während der Fahrt möglich ist, muss doch der Ladebetrieb unterbrochen werden oder zumindest im Ladebetrieb auf das Zerschneiden des Ernteguts verzichtet werden, da die Messer zum Zwecke des Schärfens aus dem Förderkanal herausgeschwenkt werden müssen. Insofern kann es zu Betriebsverzögerungen kommen.

Im Gegensatz zu solchen Ladewagen mit im Ladebetrieb stehenden Messern wurden andererseits Ladewagen mit im Ladebetrieb rotierenden Messern vorgeschlagen, bei denen die Messer kontinuierlich während des Ladebetriebs geschliffen werden können. Einen solchen Ladewagen zeigt die DE 10 2004 037 212 A1. Dabei bildet das Messer eine kreisförmige Scheibe, deren Umfang eine umlaufende, ggf. mit einer Vielzahl von Schneidzacken versehene Schneide bildet. Dieses kreisförmige Schneidblatt ragt mit einem Umfangsabschnitt in den Förderkanal hinein und wird nach Art einer Kreissäge rotierend angetrieben, um eine ausreichende Schneidleistung mit noch vernünftigen Schnittkräften zu erzielen. Trotz der rotierenden Antriebsbewegung bleibt der Schnitt im Vergleich zu stehenden Messern mit säbelförmiger, konvexer Schneide jedoch weniger futterschonend, da aufgrund der kreisförmigen Schneidengeometrie am Anschnittspunkt, d.h. dem am weitesten stromauf im Förderkanal liegenden Messerabschnitt, ein relativ steiler Anstellwinkel der Schneide gegeben ist. Von Vorteil ist allerdings bei derartigen kreissägenähnlich rotierenden Messern, dass der außerhalb des Förderkanals liegende Abschnitt des Schneidblatts kontinuierlich geschliffen werden kann. Es braucht lediglich ein Schleifstein oder dergleichen außerhalb des Förderkanals an das Schneidblatt gefahren werden, an dem die Schneide durch die Rotationsbewegung des Schneidblatts kontinuierlich vorbei gefahren wird.

Der vorliegenden Erfindung liegt demgegenüber die Aufgabe zugrunde, ein verbessertes Erntegutschneidmesser für einen Ladewagen oder eine Ballenpresse mit im Ladebetrieb stehenden Messern zu schaffen, das Nachteile des Standes der Technik vermeidet und letzteren in vorteilhafter Weise weiterbildet. Vorzugsweise soll der sanfte Schnitt der im Ladebetrieb stehenden Messer erhalten bleiben, jedoch gleichzeitig das Schleifen der Messer auch im Ladebetrieb ermöglicht werden.

Erfindungsgemäß wird diese Aufgabe durch ein Erntegutschneidmesser gemäß Anspruch 1 gelöst. Bevorzugte Ausgestaltungen der Erfindung sind Gegenstand der abhängigen Ansprüche.

Erfindungsgemäß wird also vorgeschlagen, dass der Messerkorpus mehrere jeweils für einen stehenden Schnitt ausgebildete Schneiden aufweist, die über den Umfang des Messerkorpus versetzt hintereinander angeordnet sind, und an dem Messerkorpus im wesentlichen zentrisch zwischen den Schneiden eine Drehlagerstelle vorgesehen ist, mittels derer der Messerkorpus von einer Betriebsstellung in eine nächste Betriebsstellung weitergeschaltet werden kann, in der eine vor Weiterschaltung im Förderkanal befindliche Schneide aus dem Förderkanal herausgedreht und eine zunächst nicht im Förderkanal befindliche Schneide in den Förderkanal hineingedreht werden kann, so dass die jeweils aktive Schneide nach ihrer Abnutzung durch eine frische Schneide ersetzt werden kann. Im Gegensatz zu den Schneiden rotierender Messer besitzen die Schneiden jeweils eine Schneidenlänge von zumindest ¹/₁₀ der gesamten Umfangslänge des Messerkorpus, so dass auch für einen stehenden Schnitt eine ausreichende Schneidenlänge zur Verfügung steht, um das durch den Förderkanal geführte Erntegut sanft zu zerschneiden. Das Messer bildet sozusagen ein plattenförmiges Revolvermagazin, das mehrere Schneiden bereithält und nach Abnutzung der gerade aktiven, im Förderkanal liegenden Schneide mit einer frischen Schneide in den Förderkanal drehbar ist, die dann in der neuen, wiederum ruhenden Betriebsstellung im Förderkanal steht und hierdurch einen sanften Erntegutschnitt bewirkt. Das Messer besitzt dabei so viele Betriebsstellungen wie Schneiden, wobei in jeder Betriebsstellung eine Schneide in der im Förderkanal vorgesehenen Schneidstellung ist und zumindest eine weitere Schneide außerhalb des Förderkanals in der Schärfstellung bereitgehalten wird, um dort geschärft zu werden. Während mit der einen Schneide geschnitten wird, kann die andere Schneide geschärft werden. Hierdurch kann der Ladewagen kontinuierlich im Ladebetrieb betrieben werden bzw. können die Unterbrechungen des Ladebetriebs bzw. die Beeinträchtigungen des Ladebetriebs auf den kurzen Moment alleine beschränkt werden, in dem das Messer weitergeschaltet wird. Der Ladebetrieb braucht hingegen nicht mehr für die Zeit unterbrochen werden, die notwendig ist, um eine Schneide zu schärfen. Gleichzeitig braucht der sanfte Schnitt von stehenden Messern nicht geopfert werden. Im Gegensatz zu auch im Ladebetrieb rotierenden Messern steht die Schneide in der jeweiligen Betriebsstellung im Förderkanal, so dass die an sich bekannte Schnittkinematik stehender Messer beibehalten werden kann.

Die Geometrie der mehreren Schneiden des zumindest einen Messers kann grundsätzlich verschieden ausgebildet sein. Vorzugsweise jedoch sind alle Schneiden des Messers jeweils säbelförmig, konvex gekrümmt, insbesondere derart, dass die jeweils in der Schneidstellung im Förderkanal befindliche Schneide in Förderrichtung betrachtet von der Förderkanalwand, durch die hindurch das Messer in den Förderkanal ragt, stetig zunehmend weiter in den Förderkanal hineinragt. Die Steigung der Schneide gegenüber der Förderrichtung durch den Förderkanal kann vom Anschnittspunkt, d.h. im in Förderrichtung am weitesten stromauf liegenden Schneidenpunkt, bis zum Schneidenende hin kontinuierlich zunehmen, wobei am Anschnittspunkt die Schneide näherungsweise tangential in die Förderkanalwandung übergehen kann. Hierdurch wird ein stetig zunehmender Schneiddruck erzielt, der einen sanften Schnitt bewirkt und eine futterschonende Erntegutaufnahme gewährleistet. Zudem ergibt sich eine große wirksame Schneidenlänge, die insgesamt eine gleichmäßige, geringe Schneidenabnutzung mit sich bringt.

Grundsätzlich ausreichend ist es, wenn jedes Messer zwei Schneiden besitzt, so dass zumindest eine Schneide in Schneidenstellung und zumindest eine Schneide in Schärfstellung gehalten werden kann. Vorzugsweise jedoch besitzt das Messer drei oder mehr Schneiden, allerdings vorteilhafterweise nicht mehr als sechs Schneiden, um noch eine ausreichende Schneidenlänge bei insgesamt noch vernünftigem Durchmesser des Messerkorpus zu ermöglichen. Insbesondere umfasst das Messer vier Schneiden. Dies erlaubt es ggf. ein Messer auch dann weiter zu schalten und erneut eine geschärfte Schneide zum Einsatz zu bringen, wenn für einen Schärfvorgang noch keine Zeit war. Alternativ oder zusätzlich können ggf. auch unterschiedliche Schneidenkonfigurationen für unterschiedliches Futtergut und Einsatzzwecke bereitgehalten und zum Einsatz gebracht werden. Das Messer kann dabei beim Weiterschalten um jeweils den Teilungswinkel zwischen zwei benachbarten Schneiden weitergeschaltet werden. Dabei muss jedoch nicht zwangsweise um nur eine Schneide weitergeschaltet werden, es kann vielmehr auch um mehr als eine Schneide weitergeschaltet werden, d.h. es kann beispielsweise von der ersten auf eine dritte Schneide oder in ähnlicher Weise auf eine andere geschärfte Schneide weitergeschaltet werden.

In vorteilhafter Weiterbildung der Erfindung sind die Schneiden zueinander zumindest paarweise bezüglich der Messerdrehachse rotationssymmetrisch angeordnet, so dass sie durch Drehung des Messers um die Messerdrehachse um einen vorbestimmten Winkel imaginär zur Deckung gebracht werden können. Vorteilhafteniveise können alle Schneiden zueinander formidentisch und/oder rotationssymmetrisch bezüglich der genannten Drehlagerstelle des Messerkorpus sein.

Die Länge der Schneiden ist dabei in jedem Fall so beschaffen, dass eine für einen stehenden Schnitt ausreichende Schnittlänge erzielt wird, d.h. bei stehendem Messer eine ausreichend lange Schneide zur Verfügung steht, über die das durch den Förderkanal geförderte Erntegut hinweggezogen wird, so dass ein sanfter Schnitt erreicht wird. Vorteilhafterweise ist dabei jede Schneide so lange, dass sie sich über zumindest die Hälfte der Förderkanalbreite zwischen Förderkanalwandung und Rotorkern erstreckt. In vorteilhafter Weiterbildung der Erfindung kann die Schneidenlänge einer jeden Schneide mehr als ¹/₈, weiter vorzugsweise mehr als ¹/₆ der Umfangslänge des Messerkorpus betragen, wobei hierbei als Umfang des Messerkorpus näherungsweise auch ein den Messerkorpus einbeschreibender Hüllkreis verstanden werden kann. Insgesamt betrachtet bildet das Messer ein Vieleck mit konkav gewölbten Schenkeln, wobei die Anzahl der Ecken vorzugsweise zwischen drei und sechs liegt. Die Schneiden sind dabei derart ausgebildet, dass sich in dem Förderkanal eines Ladewagens jeweils nur eine Schneide in Arbeitsrichtung erstreckt, d.h. jeweils nur eine Schneide sozusagen dem Erntegutstrom entgegenblickt.

Vorteilhafterweise umfasst das Messer Drehverriegelungsmittel zum vorzugsweise formschlüssigen Drehverriegeln des Messers in der jeweiligen Betriebsstellung. Diese Drehverriegelungsmittel können grundsätzlich verschieden ausgebildet sein. Nach einer bevorzugten Ausführung der Erfindung besitzt das jeweilige Messer an dessen Außenumfang bzw. in einem umfangsnahen Randabschnitt geeignete Rastkonturen in Form von Vorsprüngen oder Senken, wobei vorzugsweise zumindest so viele Rastkonturen wie Schneiden vorgesehen sind. Das Messer kann insbesondere an seinem Umfang zwischen den Schneiden Verriegelungsabschnitte umfassen, mit denen ein Riegelelement einer Drehverriegelungsvorrichtung der Erntemaschine in Eingriff bringbar ist. Eine solche umfangsnahe Drehverriegelung besitzt einen günstigen Hebelarm, mittels dessen das Messer mit geringen Kräften drehfest in der jeweiligen Betriebsstellung gehalten werden kann.

Insbesondere können die vorgenannten Verriegelungsabschnitte jeweils eine Rastmulde und/oder einen Rastvorsprung aufweisen, mit der bzw. mit dem eine Rastklinke in Eingriff bringbar ist, die vorzugsweise radial in die Rastmulde bzw. auf den Rastvorsprung aufschnappbar ist. Die Rastklinke kann hierbei federvorgespannt auf ihre verriegelnde Stellung hin vorgespannt sein, wobei der Eingriffsabschnitt der Rastklinke und/oder der Verriegelungsabschnitt am Messer derart ausgebildet sein kann, dass ein Weiterdrehen des Messers in die nächste Betriebsstellung unter automatischem Lösen der Rastklinke möglich ist. Insbesondere kann die vorgenannte Rastmulde und die diese rechts und links begrenzenden Rastvorsprünge zu einer Seite hin einen sanften, über die Keilwirkung das Lösen der Rastklinke bewirkenden Anstieg und auf der anderen Seite einen steilen, die Rastklinke in der Verriegelungsstellung haltenden Anstieg umfassen, so dass das Messer aus einer verriegelten Betriebsstellung herausgedreht werden kann, wobei sich die Rastklinke löst. Bei Erreichen der nächsten Betriebsstellung fällt die Rastklinke wieder in die Rastmulde, in der sie dann das Messer formschlüssig hält, insbesondere entgegen den an der Schneide bewirkten Schnittkräften. Mit dem steileren Anstieg ist das Messer gegen die Schneidkräfte abgestützt, über den flacheren Anstieg kann die Rastklinke sanft in die genannte Rastmulde fahren. Vorteilhafterweise ist das Messer entsprechend der Förderrichtung im Förderkanal in die nächste Betriebsstellung weiterschaltbar, so daß nach Lösen der Drehverriegelung das Weiterdrehen vorteilhafterweise durch die vom vorbeigeförderten Erntegut ausgeübte Kraft auf das Messer bewirkt werden kann. Alternativ oder zusätzlich kann dem Messer ein geeigneter Drehantrieb zum Weiterschalten in die gewünschte nächste Schneidstellung zugeordnet sein.

Das Schärfen der jeweils aus dem Förderkanal herausgedrehten Schneide kann grundsätzlich in verschiedener Weise erfolgen. Denkbar wäre es, ein materialverdrängendes, die Schneidkanten der jeweiligen Schneide ausformendes Schärfen vorzusehen und die Messerschneiden hierfür geeignet auszubilden. In Weiterbildung der Erfindung jedoch ist der Messerkorpus derart beschaffen, dass die Schneiden der Messer geschliffen werden können. Dabei kann einem Schleifer in an sich bekannter Weise ein Stellantrieb zugeordnet sein, der das Schleifwerkzeug entlang der ggf. säbelförmigen, konvex gekrümmten Schneide hin und her fährt und bei Vorhandensein mehrerer Messer den Schleifer parallel zu einem die Messer tragenden Messerbalken von Messer zu Messer weiterfährt.

Es versteht sich, dass das zumindest eine Messer nicht nur zum Zwecke des Schärfens weitergeschaltet werden kann. Alternativ oder zusätzlich kann auch ein automatisches Weiterdrehen der Scheiben unabhängig von der Schneidstärke erfolgen, um eine gleichmäßige Abnutzung der Schneiden zu ermöglichen. Die Parameter für ein solches automatisches Weiterdrehen können verschiedene sein, insbesondere kann das Weiterschalten der Messer in Abhängigkeit der Betriebszeit des Ladewagens bzw. seiner Aufnahmevorrichtung, eines Erntegutdurchsatzes, einer Fuhrenanzahl, eines Erntegutgewichts und dergleichen gesteuert werden.

Die Erfindung wird nachfolgend anhand eines bevorzugten Ausführungsbeispiels und zugehöriger Zeichnungen näher erläutert. In den Zeichnungen zeigen:
- Fig. 1:: eine Seitenansicht eines von einem Schlepper gezogenen Ladewagens mit Erntegutschneidmessern nach einer bevorzugten Ausführung der Erfindung,
- Fig. 2:: eine Seitenansicht eines Messers der Schneidvorrichtung und des Förderkanals nebst der darin vorgesehenen Fördereinrichtung im Erntegutaufnahmebereich des Ladewagens aus Fig. 1,
- Fig. 3:: eine perspektivische, ausschnittsweise Seitenansicht der Schneidvorrichtung aus Fig. 2, und
- Fig. 4:: eine perspektivische, ausschnittsweise Ansicht der Schneideinrichtung ähnlich Fig. 3, jedoch aus einem anderen Blickwinkel.

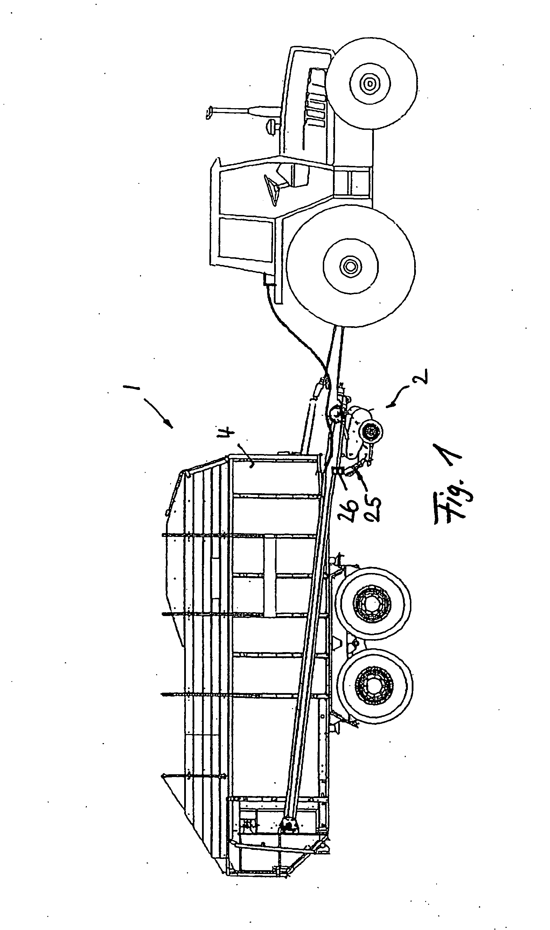

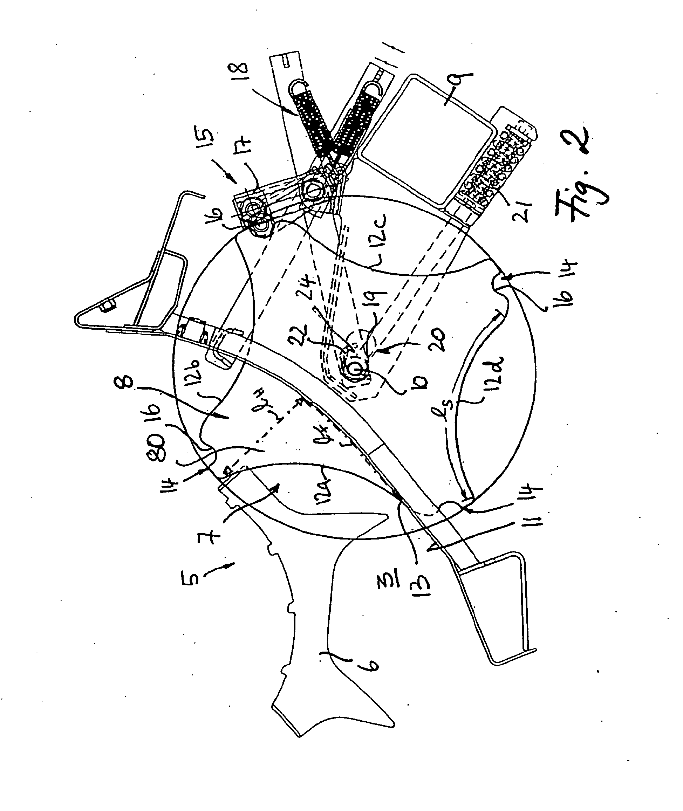

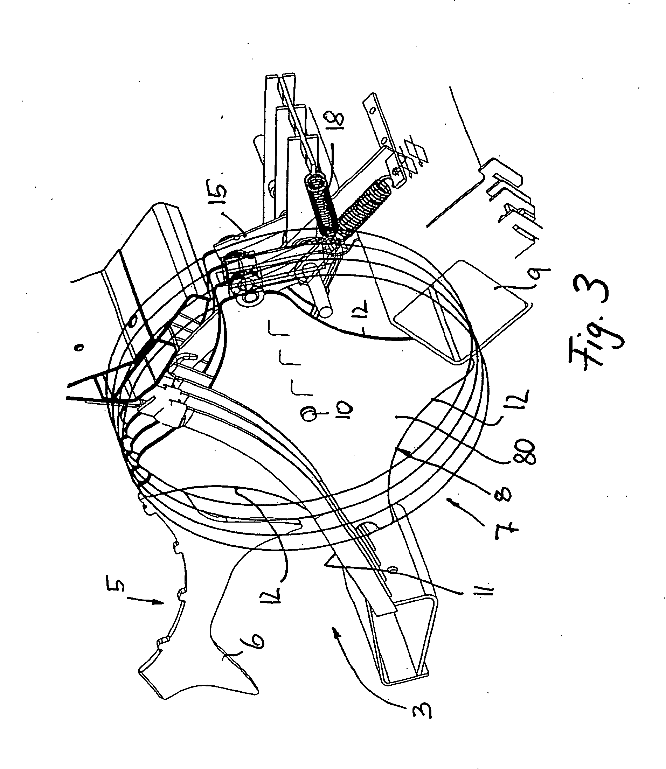

Der in Figur 1 gezeigte Ladewagen 1 besitzt in an sich üblicher Weise eine Aufnahmevorrichtung 2, beispielsweise in Form einer absenk- und hochfahrbaren Pick-Up mit Stachelwalze, sowie einen daran anschließenden Förderkanal 3, der in den Erntegutspeicher 4 des Ladewagens 1 führt. In dem genannten Förderkanal 3 kann eine Fördereinrichtung 5 mit einem Rotor 6 angeordnet sein, der das von der Aufnahmevorrichtung 2 aufgenommene Erntegut durch den Förderkanal 3 in den Erntegutspeicher 4 fördert, vgl. Figur 2 und 3.

Im Bereich des Förderkanals 3 ist eine Schneideinrichtung 7 mit einer Vielzahl von Messern 8 vorgesehen, die an einem gemeinsamen Messerbalken 9 gelagert sind.

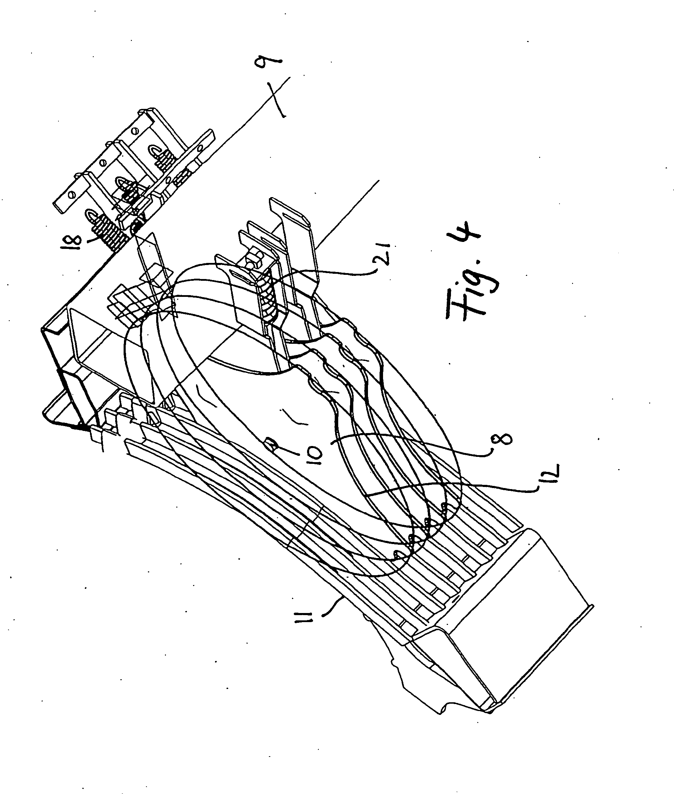

Wie die Figuren 3 und 4 zeigen, sind die im wesentlichen plattenförmig ausgebildeten Messer 8 dabei um Messerdrehachsen 10 drehbar an dem Messerbalken 9 gelagert, die sich im wesentlichen koaxial zueinander erstrecken und parallel zur Längsachse des Messerbalkens 9 angeordnet sind. Der Messerbalken 9 umfasst hierzu zwischen den Messern auskragende Messertragarme, an deren Enden die genannten Messerdrehachsen 10 gelagert sind.

Wie Figur 2 zeigt, ist die Anordnung bei der gezeichneten Ausführung dabei derart getroffen, dass sich die Messerdrehachse 10 außerhalb des Förderkanals 3 in der Nähe einer den Förderkanal 3 begrenzenden Förderkanalwandung 11 erstreckt. Die besagte Förderkanalwandung 11 besitzt schlitzartige Messer-Durchtrittsaufnehmungen, durch die hindurch die Messer 8 mit einem Abschnitt in den Förderkanal 3 hineinragen. Die Messer 8 erstrecken sich dabei zwischen den Mitnehmerarmen des Rotors 6 der Fördereinrichtung 5.

Wie insbesondere Figur 2 zeigt, umfasst jedes Messer 8 mehrere Schneiden 12, die jeweils säbelförmig konvex gekrümmt sind und abschnittsweise den Außenumfang des Messers 8 bilden. In der gezeichneten Ausführung umfassen die Messer 8 dabei vier Schneiden 12a, 12b, 12c und 12d, die sich über jeweils einen Sektor von mehr als 45° am Umfang des Messers 8 erstrecken.

Die Geometrie der Schneiden 12 ist dabei derart ausgebildet, dass die jeweils im Förderkanal 3 in Schneidstellung stehende Schneide vom Anschnittpunkt 13 aus in Förderrichtung zunehmend weiter von der Förderkanalwandung 11 weg in den Förderkanal 3 hinein erstreckt. In der gezeichneten Ausführung sind die Schneiden 12 dabei kontinuierlich steigend gekrümmt, wobei in der gezeichneten Ausführung im Anschnittpunkt 13 die Schneide 12 näherungsweise tangential in die Förderkanalwandung 11 übergeht.

Wie Figur 2 zeigt, erstreckt sich die im Förderkanal 3 stehende Schneide im wesentlichen durch die gesamte Breite des Förderkanals 3 hindurch, d.h. das stromabseitige Ende der Schneide 12 liegt im Bereich der inneren Wandung des Förderkanals 3 bzw. im Bereich des Außenumfangs des Rotors 6, vgl. Figur 2. Die Steigung der Schneide 12 ist im gezeichneten Ausführungsbeispiel dabei derart bemessen, dass die effektive Schneidenlänge I_{F} in Förderrichtung größenordnungsmäßig etwa der Schneidenhöhe I_{H} quer zur Förderrichtung durch den Förderkanal 3 entspricht, vgl. Figur 2. Es versteht sich jedoch, dass grundsätzlich andere Schneidengeometrien möglich sind.

Zwischen den Schneiden 12 sind in der gezeichneten Ausführung am Umfang der Messer 8 Verriegelungsabschnitte 14 vorgesehen, an denen die Messer 8 von einer Drehverriegelungsvorrichtung 15 in der jeweiligen Betriebsstellung gehalten werden können. Alternativ könnten die Drehverriegelungsabschnitte auch an speziellen Messerhaltern vorgesehen sein, die als separates Zwischenteil ausgebildet sein können. In der gezeichneten Ausführung arbeitet die Drehverriegelungsvorrichtung 15 dabei formschlüssig. Jeder der Verriegelungsabschnitte 14 umfasst eine radiale Eingriffsmulde 16, in die eine komplementär geformte Verriegelungsnase einer Rastklinke 17 eingreifen kann. Wie Figur 2 zeigt, ist die Kontur der Eingriffsmulde 16 randseitig mit einem stetigen Verlauf harmonisch geformt, wobei die Verriegelungsnase der Rastklinke 17 ebenfalls einen gerundeten Eingriffsumfang besitzt. Die Flanken der Eingriffsmulde 16 sind dabei zu der einen Seite hin deutlich steiler ausgebildet als zu der anderen Seite hin, vgl. Figur 2. Es versteht sich, dass die steilere Flanke dabei auf der Seite angeordnet ist, die die im Ladebetrieb auftretenden Schnittkräfte an der im Förderkanal 3 stehenden Schneide 12 auffängt. Durch Lösen der Rastklinke 17 ist ein Verdrehen des Messers 8 durch die im Betrieb auftretenden Schnittkräfte oder einen geeigneten Drehantrieb und ein sanftes Wiedereinrasten der Rastklinke in der nächsten Rastmulde möglich, während bei eingeschnappter Rastklinke 17 ein Verdrehen des Messers unter den Schnittkräften durch die steilere Flanke verhindert ist.

Die besagte Rastklinke 17 ist mit einer Federeinrichtung 18 auf ihre Eingriffsstellung hin vorgespannt, so dass die Rastklinke 17 selbsttätig in die jeweilige Eingriffsmulde 16 fällt, wenn das Messer 8 in die passende Drehstellung geschaltet wird.

Wie insbesondere Figur 2 zeigt, sind die Messerdrehachsen 10 der Messer 8 translatorisch verschieblich quer zur Achsrichtung an dem Messerbalken 9 bzw. den daran vorspringenden Tragarmen gelagert. Hierzu kann an dem Messerbalken 9 bzw. den genannten vorspringenden Tragarmen eine Schiebeführung beispielsweise in Form eines Langlochs vorgesehen sein, die eine translatorische Verschiebung quer zur Förderrichtung zulässt bzw. vorgibt. In der gezeichneten Ausführung gemäß Figur 2 erstreckt sich die von der Führungsvorrichtung 19 vorgegebene Verschieberichtung der Messerdrehachsen 10 näherungsweise senkrecht zu der Kontur der im Förderkanal 3 stehenden Schneide, genauer gesagt deren mittleren Abschnitt.

Die Messerdrehachsen 10 werden dabei von einem Messerdrehachsenhalter 20 gehalten, der eine Federeinrichtung 21 umfasst, die die Messerdrehachsen 10 in ihre Betriebsstellung zum Förderkanal 3 hin vorspannt. In der gezeichneten Ausführung wirkt die Federeinrichtung 21 auf einen stabförmigen Übertrager, der verschieblich am Messerbalken 9 gelagert ist und mit der jeweiligen Messerdrehachse 10 verbunden ist.

Die Messer 8 können mit den Messerdrehachsen 10 verriegelt werden. Hierzu ist ein Messerdrehachsenriegel 22 vorgesehen, der in der gezeichneten Ausführung als Schwenkhebel ausgebildet ist. Wird der Drehachsenriegel 22 über die jeweilige Messerdrehachse 10 geschoben bzw. geschwenkt, kann das jeweilige Messer 8 nicht in Richtung der Messerdrehachse 10 von dieser herunterrutschen bzw. aus der Messerdrehachsenhalterung herausrutschen. Gleichzeitig kann der Messerdrehachsenriegel 22 eine Schiebebegrenzung zur Begrenzung der vorgenannten Verschiebbarkeit des Messers quer zur Drehachse bilden. Der u-förmige Eingriffsabschnitt 24 an dem vorderen Endabschnitt des Schwenkhebels des Messerdrehachsenriegels begrenzt in der verriegelnden Stellung des Messerdrehachsenriegels 22 die Verschiebbarkeit der Messerdrehachse 10 in der vorgenannten Langlochführung, insbesondere verhindert er ein Hineinbewegen der Drehachse in den vergrößerten Abschnitt des genannten Langlochs, in dem die Drehachse entnommen werden kann. Der Drehachsenriegel 22 kann dabei weggeschwenkt werden, wie dies Figur 2 zeigt, um das jeweilige Messer 8 freizugeben. Vorteilhafterweise löst sich bzw. entspannt sich in einem vorbestimmten Maße hierbei die an dem Schwenkhebel des Messerdrehachsenriegels 22 befestigte Federeinrichtung 18, die die Rastklinke 17 spannt, so daß ein Wechsel des jeweiligen Messers 8 bzw. der Messer leichtgängig ermöglicht wird.

Damit ergibt sich folgende Funktion: Im Betrieb steht das Messer 8 zunächst mit seiner ersten Schneide 12a in dem Förderkanal 3, wodurch in an sich bekannter Weise ein Zerschneiden des durch den Förderkanal 3 geförderten Ernteguts bewirkt wird. Nach einer vorbestimmten Zeit oder bei Erfüllung eines anderen Schaltparameters oder auch bei manueller Überprüfung und Feststellung nicht ausreichender Schärfe wird das Messer 8 um eine Schneide oder auch mehrere Schneiden weiter geschaltet, d.h. es wird solange um die Messerdrehachse 10 weitergedreht, bis die nächste oder auch eine weitere Schneide in dem Förderkanal 3 steht, so dass die frische Schneide dann wieder einen schonenden Schnitt mit geringen Schnittkräften bewirken kann.

Grundsätzlich ist ein Weiterschalten in die jeweils nächste Betriebsstellung durch manuelles Weiterdrehen der Messer 8 möglich. Um einen automatischen Betrieb zu erreichen, kann die Schaltvorrichtung einen in den Figuren nicht näher vorgesehenen Stellantrieb umfassen, durch den die Messer in Abhängigkeit eines oder mehrerer vorbestimmter Schaltparameter in die nächste Betriebsstellung weitergeschaltet werden können. Ggf. ist auch ein Weiterschalten unter den entstehenden Schnittkräften möglich, wobei nur die Drehverriegelung zu lösen wäre.

Die aus dem Förderkanal 3 herausgedrehte Schneide, in Figur 2 beispielsweise die mit 12d gekennzeichnete Schneide, kann durch eine außerhalb des Förderkanals 3 vorgesehene Messerschleifvorrichtung 25 geschärft werden. Diese Messerschleifvorrichtung 25 kann grundsätzlich verschieden ausgebildet sein. Insbesondere kann sie einen Schleifer vorzugsweise in Form eines Scheibenschleifers umfassen, der an einer beweglichen Schleiferaufhängung 26 gelagert ist, die eine Schleiferführung bildet, mit Hilfe derer der Schleifer einerseits von Messer zu Messer gefahren und andererseits entlang einer genau vorgegebenen Bewegungsbahn über die säbelförmig gekrümmte Schneide des Messers 8 gefahren werden kann. Die Schleiferaufhängung 26 kann hierzu eine Quertraverse parallel zum Messerbalken 9 sowie einen daran schwenkbar gelagerten Schwenkarm umfassen, mittels dessen die Schleifbewegung entlang der Schneide 12 erreicht werden kann. Bezüglich der weiteren Ausbildung der Messerschleifvorrichtung 25 wird auf die DE 20 2004 004 133 U1 verwiesen.

## Patentansprüche

1. Erntegutschneidmesser für einen Ladewagen, eine Ballenpresse oder dergleichen, mit einem plattenförmigen Messerkorpus (80), der umfangsseitig zumindest eine vorzugsweise etwa säbelförmig gekrümmte Schneide (12) aufweist, die für einen stehenden Schnitt in einem Erntegutförderkanal vorgesehen ist, durch den hindurch das zu schneidende Erntegut über das stehende Erntegutschneidmesser führbar ist, **dadurch gekennzeichnet, dass** der Messerkorpus (80) mehrere jeweils für einen stehenden Schnitt ausgebildete Schneiden (80) aufweist, die über den Umfang des Messerkorpus (80) versetzt hintereinander angeordnet sind und jeweils eine Schneidenlänge (L_{S}) von zumindest ¹/₁₀ der gesamten Umfangslänge des Messerkorpus (80) aufweisen, und an dem Messerkorpus (80) etwa zentrisch zwischen den Schneiden (12) eine Drehlagerkontur (10) zur drehbaren Lagerung des Messerkorpus (80) vorgesehen ist.

2. Erntegutschneidmesser nach dem vorhergehenden Anspruch, wobei alle Schneiden (12) des Messers säbelförmig konvex gekrümmt sind.

3. Erntegutschneidmesser nach einem der vorhergehenden Ansprüche, wobei die Schneiden (12) derart geformt sind, dass sie in der Schneidstellung im Förderkanal (3) von einer Förderkanalwand (11) weg, durch die hindurch das Messer (8) in den Förderkanal (3) ragt, in Förderrichtung stetig zunehmend weiter in den Förderkanal (3) hineinragen.

4. Erntegutschneidmesser nach einem der vorhergehenden Ansprüche, wobei das Messer (8) in Umfangsrichtung versetzt drei oder mehr Schneiden (12) und weniger als zehn Schneiden (12), vorzugsweise zwischen drei und sechs Schneiden (12), besitzt.

5. Erntegutschneidmesser nach einem der vorhergehenden Ansprüche, wobei insgesamt vier Schneiden (12) vorgesehen sind.

6. Erntegutschneidmesser nach einem der vorhergehenden Ansprüche, wobei die Schneiden (12) jeweils eine Schneidenlänge (Iₛ) von zumindest ⅛, vorzugsweise zumindest ¹/₆, der gesamten Umfangslänge des Messerkorpus (80) aufweisen.

7. Erntegutschneidmesser nach einem der vorhergehenden Ansprüche, wobei der Messerkorpus (80) insgesamt im wesentlichen ein Vieleck mit konkav gekrümmten Schenkeln bildet, wobei die Anzahl der Ecken zwischen drei und sechs beträgt.

8. Erntegutschneidmesser nach einem der vorhergehenden Ansprüche, wobei die Enden der Schneiden (12) eines Messers (8) auf einem gemeinsamen Kreis um die Messerdrehachse (10) angeordnet sind und/oder die Schneiden (12) eines Messers (8) rotationssymmetrisch bezüglich der Messerdrehachse (10) angeordnet sind.

9. Erntegutschneidmesser nach dem vorhergehenden Anspruch, wobei das Messer (8) an seinem Umfang zwischen den Schneiden (12) Drehverriegelungsabschnitte (14) aufweist, mit denen ein Riegelelement (17) der Drehverriegelungsvorrichtung (15) in Eingriff bringbar ist.

10. Erntegutschneidmesser nach dem vorhergehenden Anspruch, wobei die Verriegelungsabschnitte (14) jeweils eine Rastmulde (16) und/oder einen Rastvorsprung aufweisen, in die und/oder auf die eine Rastklinke radial aufschnappbar ist.

11. Verwendung eines Erntegutschneidmessers nach einem der vorhergehenden Ansprüche zum Zerschneiden von Erntegut in dem Förderkanal eines Ladewagens, der zwischen einer Aufnahmevorrichtung des Ladewagens und dessen Erntegutspeicher liegt, wobei das Erntegutschneidmesser rotatorisch stehend mit einer Schneide im Förderkanal gehalten und von Zeit zu Zeit rotatorisch auf eine andere Schneide weitergeschaltet wird.

## Claims

1. A crop cutting knife for a self-loading wagon, a baler or the like, comprising a plate-like knife body (80) which at the peripheral side has at least one blade (12) which is preferably curved in approximately sabre shape and which is provided for a standing cut in a crop conveyor through which the crop to be cut can be guided over the standing crop cutting knife, **characterised in that** the knife body (80) has a plurality of blades (80) which are each designed for a standing cut, which are arranged offset sequentially over the periphery of the knife body (80) and which each have a blade length (L_{S}) of at least 1/10 of the total peripheral length of the knife body (80); and **in that** a pivot bearing contour (10) is provided at the knife body (80) approximately centrally between the blades (12) for the rotatable bearing of the knife body (80).

2. A crop cutting knife in accordance with the preceding claim, wherein all the blades (12) of the knife have a convex curvature in sabre shape.

3. A crop cutting knife in accordance with one of the preceding claims, wherein the blades (12) are shaped such that they project away from a conveyor wall (11), through which the knife (8) projects into the conveyor (3), constantly further and further into the conveyor (3) in the cutting position in the conveyor (3).

4. A crop cutting knife in accordance with one of the preceding claims, wherein the knife (8) has offset in the peripheral direction three or more blades (12) and fewer than ten blades (12), preferably between three and six blades (12).

5. A crop cutting knife in accordance with one of the preceding claims, wherein a total of four blades (12) are provided.

6. A crop cutting knife in accordance with one of the preceding claims, wherein the blades (12) each have a blade length (Iₛ) of at least 1/8, preferably of at least 1/6 of the total peripheral length of the knife body (80).

7. A crop cutting knife in accordance with one of the preceding claims, wherein the knife body (80) substantially forms a polygon with concavely curved limbs over all, with the number of the corners amounting to between three and six.

8. A crop cutting knife in accordance with one of the preceding claims, wherein the ends of the blades (12) of a knife (8) are arranged on a common circle around the axis of rotation (10) of the knife and/or the blades (12) of a knife (8) are arranged rotationally symmetrically with respect to the axis of rotation (10) of the knife.

9. A crop cutting knife in accordance with the preceding claim, wherein the knife (8) has rotary latching portions (14) at its periphery between the blades (12) and a latch element (17) of the rotary latching device (15) can be brought into engagement with said rotary latching portions.

10. A crop cutting knife in accordance with the preceding claim, wherein the latching portions (14) each have a latch depression (16) and/or a latch projection into and/or onto which a latch pawl can snap radially.

11. Use of a crop cutting knife in accordance with one of the preceding claims for the chopping of crop in the conveyor of a self-loading wagon which is disposed between a receiving apparatus of the self-loading wagon and its crop store, with the crop cutting knife being held in a rotarily standing position with a blade in the conveyor and being switched further to another blade in a rotary manner from time to time.

## Revendications

1. Lame de coupe de plantes récoltées pour un chariot chargeur, une presse de balle ou analogue, avec un corps de couteau en forme de plaque (80) qui présente au côté du pourtour au moins une lame (12) courbée de préférence à peu près en forme de sabre, qui est prévue pour une coupe verticale dans un canal de convoyage de plantes récoltées, à travers lequel peuvent être guidées les plantes récoltées à découper par la lame de coupe verticale de plantes récoltées, **caractérisée en ce que** le corps de couteau (80) présente plusieurs lames (80) réalisées chacune pour une coupe verticale, qui sont disposées sur le pourtour du corps de couteau (80) d'une manière décalée les unes derrière les autres et présentent respectivement une longueur de lame (Lₛ) d'au moins 1/10 de la longueur de pourtour totale du corps de couteau (80), et qu'il est prévu au corps de couteau (80) à peu près au centre entre les lames (12) un contour de palier de rotation (10) pour le logement tournant du corps de couteau (80).

2. Lame de coupe de plantes récoltées selon la revendication précédente, où toutes les lames (12) du couteau sont courbées d'une manière convexe en forme de sabre.

3. Lame de coupe de plantes récoltées selon l'une des revendications précédentes, où les lames (12) sont formées de telle sorte qu'elles font saillie en position de coupe dans le canal de convoyage (3), au loin d'une paroi de canal de convoyage (11), à travers laquelle fait saillie le couteau (8) dans le canal de convoyage (3), dans la direction de convoyage selon une étendue croissante dans le canal de convoyage (3).

4. Lame de coupe de plantes récoltées selon l'une des revendications précédentes, où le couteau (8) possède, d'une manière décalée dans la direction périphérique, trois ou plusieurs lames (12) et moins de dix lames (12), de préférence entre trois et six lames (12).

5. Lame de coupe de plantes récoltées selon l'une des revendications précédentes, où sont prévues au total quatre lames (12).

6. Lame de coupe de plantes récoltées selon l'une des revendications précédentes, où les lames (12) présentent chacune une longueur de lame (lₛ) d'au moins 1/8, de préférence d'au moins 1/6 de la longueur de pourtour totale du corps de couteau (80).

7. Lame de coupe de plantes récoltées selon l'une des revendications précédentes, où le corps de couteau (80) forme dans l'ensemble sensiblement un polygone avec des branches courbées d'une manière concave, où le nombre des coins est compris entre trois et six.

8. Lame de coupe de plantes récoltées selon l'une des revendications précédentes, où les extrémités des lames (12) d'un couteau (8) sont disposées sur un cercle commun autour de l'axe de rotation (10) du couteau et/ou les lames (12) d'un couteau (8) sont disposées d'une manière symétrique en rotation par rapport à l'axe de rotation (10) du couteau.

9. Lame de coupe de plantes récoltées selon la revendication précédente, où le couteau (8) présente à son pourtour entre les lames (12) des sections de verrouillage de rotation (14) avec lesquelles peut être mis en prise un élément de verrouillage (17) du dispositif de verrouillage en rotation (15).

10. Lame de coupe de plantes récoltées selon la revendication précédente, où les sections de verrouillage (14) présentent chacune un creux d'encliquetage (16) et/ou une saillie d'encliquetage dans lesquels et/ou sur lequels un cliquet d'encliquetage peut s'enclencher radialement.

11. Utilisation d'une lame de coupe de plantes récoltées selon l'une des revendications précédentes, pour la coupe de plantes récoltées dans le canal de convoyage d'un chariot chargeur, qui se situe entre un dispositif de réception du chariot chargeur et le réservoir de plantes récoltées de celui-ci, où la lame de coupe de plantes récoltées est retenue d'une manière verticale en rotation avec une lame dans le canal de convoyage et est commutée de temps en temps, en rotation, à une autre lame.
